# EUROPÄISCHE PATENTSCHRIFT

(11) **EP 3 678 216 B1**
(45) Veröffentlichungstag und Bekanntmachung des Hinweises auf die Patenterteilung: **17.08.2022**
(21) Anmeldenummer: 19150519.7
(22) Anmeldetag: 07.01.2019
(51) Int. Cl.: H01M 10/48, H01M 50/20, H01M 50/213, H01M 50/51, H01M 50/569

(54) **AKKUPACK UND GARTEN- UND/ODER FORSTBEARBEITUNSGSSYSTEM**
BATTERY PACK AND GARDENING AND/OR FORESTRY SYSTEM
BLOC D'ACCUMULATEUR ET SYSTÈME DE TRAVAUX DE JARDINAGE ET / OU DE FORESTIERS

(43) Veröffentlichungstag der Anmeldung: 08.07.2020
(73) Patentinhaber: Andreas Stihl AG & Co. KG, 71336 Waiblingen (DE)
(72) Erfinder: von Hofen, Malte, 70197 Stuttgart (DE); Nordmann, Alexander, 70437 Stuttgart (DE); Kolb, Joachim, 71638 Ludwigsburg (DE)
(74) Vertreter: Patentanwälte Ruff, Wilhelm, Beier, Dauster & Partner mbB

(56) Entgegenhaltungen:
- DE-A1-102012 209 174
- DE-U1-202010 012 151
- JP-A- 2011 108 379
- JP-A- 2015 201 363

## Beschreibung

### ANWENDUNGSGEBIET UND STAND DER TECHNIK

Die Erfindung bezieht sich auf einen Akkupack zur Versorgung eines elektrisch angetriebenen Garten- und/oder Forstbearbeitungsgeräts mit elektrischer Antriebsleistung und auf ein Garten- und/oder Forstbearbeitungssystem aufweisend einen solchen Akkupack und ein elektrisch angetriebenes Garten- und/oder Forstbearbeitungsgerät.

Die JP 2011 108379 A offenbart eine Leistungsversorgungsvorrichtung, ein Fahrzeug ausgestattet mit einer Leistungsversorgungsvorrichtung, und ein Verfahren zur Montage einer Leistungsversorgungsvorrichtung, insbesondere zur effizienten Montage eines Gehäuses mit keinem Beißen eines Kabels. Die Leistungsversorgungsvorrichtung umfasst einen Gehäusekörper, dessen eine Oberfläche geöffnet ist, eine erste Abdeckplatte zum Schließen mindestens eines Teils der geöffneten Oberfläche des Gehäusekörpers, einen Batterieblock, in welchem eine Mehrzahl von Batteriezellen zur Lagerung in dem Gehäusekörper gestapelt sind, und ein Hochspannungskabel, welches mit dem Batterieblock elektrisch verbunden ist. Der Gehäusekörper umfasst einen Austrittsraum zum temporären Austreten des Hochspannungskabels, wenn die erste Abdeckplatte befestigt ist, und einen Fixierraum zum Halten des Hochspannungskabels, nachdem die erste Abdeckplatte an dem Gehäusekörper darin gesichert ist.

Die JP 2015 201363 A offenbart einen Batteriepack, insbesondere der eine Interferenz zwischen Kabeln verhindert und gleichzeitig das Fitting der Kabel verwendet zum Verbinden eines Batteriestapels und eines Geräts verbessert. Der Batteriepack umfasst: einen Batteriestapel; einen Strombegrenzer vorgesehen in dem Strompfad des Batteriestapels; und eine Batterieüberwachungseinheit, welche die Spannung usw. des Batteriestapels detektiert. Der Strombegrenzer und die Batterieüberwachungseinheit sind lateral benachbart zueinander angeordnet. Der Strombegrenzer hat einen ersten Verbindungsteil verbunden mit dem Leistungskabel des Batteriestapels. Die Verbindungsoberfläche eines ersten Verbindungsteils ist dem unteren Teil des Strombegrenzers zugewandt. Die Batterieüberwachungseinheit hat einen zweiten Verbindungsteil verbunden mit dem Spannungsdetektionskabel des Batteriestapels. Die Verbindungsoberfläche des zweiten Verbindungsteils ist dem Strombegrenzer lateral zu diesem angeordnet zugewandt. Der Strombegrenzer ist in einem Winkel vorgesehen, so dass die Verbindungsoberfläche des ersten Verbindungsteils sich in die Richtung einer Anordnung eines Leistungskabels sich erstreckend von einer Richtung entgegengesetzt zu der Batterieüberwachungseinheit erstreckt.

### AUFGABE UND LÖSUNG

Der Erfindung liegt als Aufgabe die Bereitstellung eines Akkupacks zur Versorgung eines elektrisch angetriebenen Garten- und/oder Forstbearbeitungsgeräts mit elektrischer Antriebsleistung, wobei der Akkupack relativ unempfindlich gegen elektrische, insbesondere elektromagnetische, Störeinflüsse, insbesondere bei gleichzeitig platzsparendem Aufbau, ist, und eines Garten- und/oder Forstbearbeitungssystems aufweisend einen solchen Akkupack und ein elektrisch angetriebenes Garten- und/oder Forstbearbeitungsgerät zugrunde.

Die Erfindung löst diese Aufgabe durch die Bereitstellung eines Akkupacks mit den Merkmalen des Anspruchs 1 und eines Garten- und/oder Forstbearbeitungssystems mit den Merkmalen des Anspruchs 13. Vorteilhafte Weiterbildungen und/oder Ausgestaltungen der Erfindung sind in den abhängigen Ansprüchen beschrieben.

Der erfindungsgemäße Akkupack ist zur, insbesondere automatischen, Versorgung eines elektrisch angetriebenen Garten- und/oder Forstbearbeitungsgeräts mit elektrischer Antriebsleistung ausgebildet beziehungsweise konfiguriert. Der Akkupack weist einen Zellblock und eine Elektronikeinheit auf. Der Zellblock weist eine Mehrzahl von Akkumulatorzellen auf, insbesondere für die elektrische Antriebsleistung. Mindestens ein Teil der Akkumulatorzellen ist von einem ersten Zellblockende des Zellblocks in mindestens einer ersten, insbesondere geraden, Richtung zu einem, insbesondere von dem ersten verschiedenen, zweiten Zellblockende des Zellblocks aufeinanderfolgend beziehungsweise nacheinander räumlich angeordnet und elektrisch in Reihe beziehungsweise Serie geschaltet. Die Elektronikeinheit weist einen Messelektronikteil auf.

Zusätzlich weist der Akkupack eine erste elektrische Leistungsleitung und eine, insbesondere von der ersten verschiedene, zweite elektrische Leistungsleitung auf, insbesondere für die elektrische Antriebsleistung. Die zweite elektrische Leistungsleitung ist mit, insbesondere mindestens, einer der Akkumulatorzellen am zweiten Zellblockende elektrisch verbunden. Die erste elektrische Leistungsleitung verläuft am zweiten Zellblockende von einer ersten Zellblockseite des Zellblocks in einer zur ersten nicht-parallelen, insbesondere orthogonalen, zweiten, insbesondere geraden, Richtung zu einer der ersten gegenüberliegenden beziehungsweise abgewandten, zweiten Zellblockseite des Zellblocks und auf der zweiten Zellblockseite entgegen der ersten Richtung zum ersten Zellblockende und ist mit, insbesondere mindestens, einer der Akkumulatorzellen am ersten Zellblockende elektrisch verbunden. Der, insbesondere vollständige, Messelektronikteil ist auf der ersten Zellblockseite vom zweiten Zellblockende entgegen der ersten Richtung beabstandet räumlich angeordnet.

Zusätzlich kann, insbesondere mindestens, eine der Akkumulatorzellen am ersten Zellblockende auf Massepotential liegen. Der, insbesondere vollständige, Messelektronikteil kann im Bereich des ersten Zellblockendes, insbesondere am ersten Zellblockende, räumlich angeordnet sein.

Der Akkupack, insbesondere die räumliche Anordnung des Messelektronikteils, ermöglicht eine elektrisch, insbesondere elektromagnetisch, verträgliche Funktion des Messelektronikteils und somit einen störfesten Aufbau des Akkupacks, insbesondere bei gleichzeitig platzsparendem Aufbau. Insbesondere kann der Messelektronikteil relativ störempfindlich sein. Im Detail ermöglicht die Anordnung des Messelektronikteils eine Verringerung oder sogar eine Vermeidung von elektrischen, insbesondere elektromagnetischen, Störeinflüssen, insbesondere eine Durchdringung durch ein elektrisches, insbesondere elektromagnetisches Feld, erzeugt durch ein Maximalpotential und/oder einen Strom, insbesondere einen Strompuls von bis zu mehreren hundert Ampere oder sogar mehreren tausend Ampere in einem Abschaltfall, insbesondere Kurzschlussabschaltfall, durch die erste elektrische Leistungsleitung und/oder die zweite elektrische Leistungsleitung hindurch auf die Messelektronik. Somit kann oder braucht nicht der Messelektronikteil eine elektrische, insbesondere elektromagnetische, Abschirmung aufweisen. Somit kann der Akkupack relativ kostengünstig sein.

Insbesondere kann der Zellblock einen rechteckförmigen Querschnitt aufweisen. Zusätzlich oder alternativ kann eine Länge des Zellblocks in der ersten Richtung größer als, insbesondere mindestens doppelt so groß wie, eine Breite des Zellblocks in der zweiten Richtung sein. Zusätzlich oder alternativ kann der Zellblock eine, insbesondere die, Länge in der ersten Richtung von minimal zehn Zentimeter (cm), insbesondere von minimal fünfzehn cm, und/oder von maximal fünfzig cm, insbesondere von maximal vierzig cm, aufweisen. Weiter zusätzlich oder alternativ kann der Zellblock eine, insbesondere die, Breite in der zweiten Richtung von minimal drei cm, insbesondere von minimal fünf cm, und/oder von maximal zwanzig cm, insbesondere von maximal fünfzehn cm, aufweisen.

Die Akkumulatorzellen können jeweils einzelne wiederaufladbare Speicherelemente für elektrische Energie auf elektrochemischer Basis sein. Zusätzlich oder alternativ können die Akkumulatorzellen Lithium-Ionen-Akkumulatorzellen sein. Weiter zusätzlich oder alternativ können die Akkumulatorzellen gleich, insbesondere typ- und/oder baugleich, sein. Weiter zusätzlich oder alternativ kann der Zellblock in der ersten Richtung minimal sechs, insbesondere minimal acht, und/oder maximal zehn und/oder insgesamt minimal fünfzehn, insbesondere minimal zwanzig, insbesondere minimal fünfundzwanzig, insbesondere dreißig, Akkumulatorzellen aufweisen.

Das zweite Zellblockende kann dem ersten Zellblockende gegenüberliegend beziehungsweise abgewandt sein. Zusätzlich oder alternativ kann das erste Zellblockende durch ein Ende einer der Akkumulatorzellen definiert sein und/oder das zweite Zellblockende kann durch ein Ende einer, insbesondere anderen, der Akkumulatorzellen definiert sein. Weiter zusätzlich kann die erste Zellblockseite durch eine Seite einer der Akkumulatorzellen definiert sein und/oder die zweite Zellblockseite kann durch ein Ende einer, insbesondere anderen, der Akkumulatorzellen definiert sein.

Der Akkupack, insbesondere die Elektronikeinheit, kann nur ein einziges Messelektronikteil aufweisen. Zusätzlich oder alternativ kann der Messelektronikteil als Analogteil bezeichnet werden. Weiter zusätzlich oder alternativ kann der Messelektronikteil zur, insbesondere automatischen, Messung und/oder zur, insbesondere automatischen, Auswertung von Messsignalen ausgebildet beziehungsweise konfiguriert sein. Weiter zusätzlich oder alternativ kann der Akkupack, insbesondere die Elektronikeinheit, Sensor- und/oder Abgriffelemente aufweisen, die woanders als das Messelektronikteil räumlich angeordnet sein können. Insbesondere kann der Messelektronikteil mit den Sensor- und/oder Abgriffelementen elektrisch verbunden sein. Weiter zusätzlich oder alternativ kann oder braucht nicht der Messelektronikteil mit der ersten elektrischen Leistungsleitung und der zweiten elektrischen Leistungsleitung elektrisch verbunden sein, insbesondere unmittelbar.

Das Massepotential kann als Potential, insbesondere Zellpotential, Null oder Ground bezeichnet werden. Zusätzlich oder alternativ kann das Massepotential das Bezugspotential für alle Mess- und/oder Leistungsspannungen darstellen. Weiter zusätzlich oder alternativ kann das Messelektronikteil auf Massepotential liegen. Weiter zusätzlich oder alternativ kann, insbesondere mindestens, eine, insbesondere andere, der Akkumulatorzellen am zweiten Zellblockende auf einem Maximalpotential beziehungsweise einer Maximalspannung liegen.

Die erste elektrische Leistungsleitung und/oder die zweite elektrische Leistungsleitung können/kann jeweils als Leistungsstromleitung bezeichnet werden und/oder ein Leistungskabel aufweisen oder sein. Zusätzlich oder alternativ kann die zweite elektrische Leistungsleitung nur am zweiten Zellblockende verlaufen. Weiter zusätzlich oder alternativ kann die erste elektrische Leistungsleitung am ersten Zellblockende von der zweiten Zellblockseite entgegen der zweiten Richtung verlaufen, insbesondere bis zu maximal einer Hälfte, insbesondere maximal einem Viertel, einer Strecke von der zweiten Zellblockseite entgegen der zweiten Richtung zu der ersten Zellblockseite. Somit kann die erste elektrische Leistungsleitung auf einem Umweg verlaufen. Weiter zusätzlich oder alternativ kann nicht eine elektrische Leistungsleitung oder braucht keine elektrische Leistungsleitung am ersten Zellblockende von der ersten Zellblockseite in der zweiten Richtung verlaufen.

Im Bereich des ersten Zellblockendes und/oder vom zweiten Zellblockende beabstandet kann bedeuten, dass der Messelektronikteil nicht im Bereich des zweiten Zellblockendes, insbesondere am zweiten Zellblockende, räumlich angeordnet sein kann oder braucht. Weiter zusätzlich oder alternativ kann im Bereich des ersten Zellblockendes und/oder vom zweiten Zellblockende beabstandet bedeuten, dass der Messelektronikteil dem ersten Zellblockende räumlich näher als dem zweiten Zellblockende angeordnet sein kann. Weiter zusätzlich oder alternativ kann im Bereich des ersten Zellblockendes bedeuten, dass der Messelektronikteil maximal fünf cm, insbesondere maximal zwei cm, insbesondere maximal einen cm, vom ersten Zellblockende beabstandet sein kann. Weiter zusätzlich oder alternativ kann vom zweiten Zellblockende beabstandet bedeuten, dass der Messelektronikteil minimal fünf cm, insbesondere minimal zehn cm, insbesondere minimal fünfzehn cm, vom zweiten Zellblockende beabstandet sein kann.

Der Messelektronikteil kann auf der ersten Zellblockseite vom Zellblock entgegen der zweiten Richtung maximal eine Hälfte, insbesondere maximal ein Viertel, einer, insbesondere der, Breite des Zellblocks und/oder maximal zehn cm, insbesondere maximal fünf cm, insbesondere maximal zwei cm, beabstandet sein oder sogar in Berührung mit dem Zellblock sein.

Der Akkupack kann eine Masse von maximal 20 Kilogramm (kg), insbesondere von maximal 10 kg, insbesondere von maximal 5 kg, aufweisen.

In einer Weiterbildung der Erfindung ist der Messelektronikteil zur, insbesondere automatischen, Messung von mindestens einer Eigenschaft beziehungsweise eines Eigenschaftswerts, insbesondere einer Temperatur und/oder einer Spannung, insbesondere einer Mittelspannung, von einer oder mehrerer der Akkumulatorzellen ausgebildet beziehungsweise konfiguriert. Dies ermöglicht einen Problemfall der einen oder der mehreren der Akkumulatorzellen zu erkennen. Insbesondere kann der Akkupack, insbesondere die Elektronikeinheit, Temperatursensor- und/oder Spannungsabgriffelemente, insbesondere Mittelspannungsabgriffelemente, aufweisen. Zusätzlich oder alternativ kann der Akkupack, insbesondere die Elektronikeinheit, insbesondere der Messelektronikteil, zur, insbesondere automatischen, Steuerung einer Abschaltung des Akkupacks, insbesondere einer Versorgung mit elektrischer Antriebsleistung, bei Überschreitung eines Temperaturobergrenzwerts und/oder bei Unterschreitung eines Temperaturuntergrenzwerts durch die gemessene Temperatur und/oder bei Überschreitung eines Spannungsobergrenzwerts und/oder bei Unterschreitung eines Spannungsuntergrenzwerts durch die gemessene Spannung ausgebildet beziehungsweise konfiguriert sein.

In einer Weiterbildung der Erfindung weist der Messelektronikteil mindestens einen Spannungsteiler und/oder mindestens einen Kondensator und/oder mindestens einen Operationsverstärker und/oder mindestens einen Mikrocontroller auf.

In einer Weiterbildung der Erfindung weist der Akkupack eine Anzahl, insbesondere eine Mehrzahl, von, insbesondere elektrischen, Messleitungen auf. Der Messelektronikteil ist mit der Anzahl von Messleitungen elektrisch verbunden, insbesondere unmittelbar. Die Anzahl von Messleitungen verläuft am ersten Zellblockende von der ersten Zellblockseite des Zellblocks in der zweiten Richtung zu den Akkumulatorzellen, insbesondere und ist mit, insbesondere mindestens, einer der Akkumulatorzellen elektrisch verbunden. Insbesondere kann die Anzahl von Messleitungen jeweils als Messsignalleitung bezeichnet werden und/oder ein Messkabel aufweisen oder sein. Zusätzlich oder alternativ kann die Anzahl von Messleitungen verschieden von der ersten elektrischen Leistungsleitung und der zweiten elektrischen Leistungsleitung sein. Weiter zusätzlich oder alternativ kann der Messelektronikteil mittels der Anzahl von Messleitungen mit den Sensor- und/oder Abgriffelementen, soweit vorhanden, elektrisch verbunden sein. Weiter zusätzlich oder alternativ kann mindestens eine der Anzahl von Messleitungen, insbesondere auf der zweiten Zellblockseite und/oder von dem ersten Zellblockende, in der ersten Richtung verlaufen. Weiter zusätzlich oder alternativ kann nicht eine Messleitung oder braucht keine Messleitung am zweiten Zellblockende verlaufen.

In einer Weiterbildung der Erfindung weist die Elektronikeinheit einen, insbesondere von dem Messelektronikteil verschiedenen, Leistungselektronikteil auf, insbesondere für die elektrische Antriebsleistung.

Zusätzlich ist der, insbesondere vollständige, Leistungselektronikteil mit der ersten elektrischen Leistungsleitung und der zweiten elektrischen Leistungsleitung elektrisch verbunden, insbesondere unmittelbar, und, insbesondere auf der ersten Zellblockseite, vom ersten Zellblockende und/oder vom Messelektronikteil in der ersten Richtung beabstandet räumlich angeordnet.

Zusätzlich oder alternativ kann der, insbesondere vollständige, Leistungselektronikteil im Bereich des zweiten Zellblockendes, insbesondere am zweiten Zellblockende, räumlich angeordnet sein, insbesondere und, insbesondere mindestens, eine der Akkumulatorzellen am zweiten Zellblockende kann auf einem, insbesondere dem, Maximalpotential liegen.

Die räumliche Anordnung des Leistungselektronikteils ermöglicht einen platzsparenden Aufbau.

Insbesondere kann der Leistungselektronikteil relativ störunempfindlich beziehungsweise relativ störrobust sein. Zusätzlich oder alternativ kann der Akkupack, insbesondere die Elektronikeinheit, nur ein einziges Leistungselektronikteil aufweisen. Weiter zusätzlich oder alternativ kann der Leistungselektronikteil als Digitalteil bezeichnet werden. Weiter zusätzlich oder alternativ kann oder braucht nicht der Leistungselektronikteil mit den Sensor- und/oder Abgriffelementen, soweit vorhanden, elektrisch verbunden sein, insbesondere unmittelbar. Weiter zusätzlich oder alternativ kann oder braucht nicht der Leistungselektronikteil mit der Anzahl von Messleitungen, soweit vorhanden, elektrisch verbunden sein, insbesondere unmittelbar.

Im Bereich des zweiten Zellblockendes und/oder vom ersten Zellblockende und/oder vom Messelektronikteil beabstandet kann bedeuten, dass der Leistungselektronikteil nicht im Bereich des ersten Zellblockendes und/oder des Messelektronikteils, insbesondere am ersten Zellblockende, räumlich angeordnet sein kann oder braucht. Weiter zusätzlich oder alternativ kann im Bereich des zweiten Zellblockendes und/oder vom ersten Zellblockende und/oder vom Messelektronikteil beabstandet bedeuten, dass der Leistungselektronikteil dem zweiten Zellblockende räumlich näher als dem ersten Zellblockende und/oder dem Messelektronikteil angeordnet sein kann. Weiter zusätzlich oder alternativ kann im Bereich des zweiten Zellblockendes bedeuten, dass der Leistungselektronikteil maximal fünf cm, insbesondere maximal zwei cm, insbesondere maximal einen cm, vom zweiten Zellblockende beabstandet sein kann. Weiter zusätzlich oder alternativ kann vom ersten Zellblockende und/oder vom Messelektronikteil beabstandet bedeuten, dass der Leistungselektronikteil minimal fünf cm, insbesondere minimal zehn cm, insbesondere minimal fünfzehn cm, vom ersten Zellblockende und/oder vom Messelektronikteil beabstandet sein kann.

Der Leistungselektronikteil kann auf der ersten Zellblockseite vom Zellblock entgegen der zweiten Richtung maximal eine Hälfte, insbesondere maximal ein Viertel, einer, insbesondere der, Breite des Zellblocks und/oder maximal zehn cm, insbesondere maximal fünf cm, insbesondere maximal zwei cm, beabstandet sein oder sogar in Berührung mit dem Zellblock sein.

In einer Ausgestaltung der Erfindung ist der Leistungselektronikteil zur, insbesondere automatischen, Umformung und/oder zur, insbesondere automatischen, Schaltung der elektrischen Antriebsleistung ausgebildet beziehungsweise konfiguriert, insbesondere weist der Leistungselektronikteil mindestens einen Leistungsschalter auf. Dies ermöglicht bei einem Problemfall, insbesondere bei einem Kurzschluss und/oder mit einer oder mehrerer der Akkumulatorzellen, die Versorgung mit elektrischer Antriebsleistung abzuschalten. Insbesondere kann der Akkupack, insbesondere die Elektronikeinheit, insbesondere der Messelektronikteil, zur, insbesondere automatischen, Steuerung des Leistungselektronikteils ausgebildet beziehungsweise konfiguriert sein. Zusätzlich oder alternativ kann der Leistungsschalter einen Leistungs-MOSFET aufweisen oder sein.

In einer Weiterbildung der Erfindung erstreckt der Messelektronikteil sich mit einem ersten Messelektronikteilende, insbesondere mindestens, bis zum ersten Zellblockende hin, insbesondere und nicht darüber hinaus.

Zusätzlich oder alternativ erstreckt der Messelektronikteil sich mit einem, insbesondere von dem ersten verschiedenen, zweiten Messelektronikteilende bis zu maximal einer Hälfte, insbesondere maximal einem Viertel, einer, insbesondere geraden, Strecke vom ersten Zellblockende in der ersten Richtung zum zweiten Zellblockende.

Zusätzlich oder alternativ kann der Leistungselektronikteil sich mit einem ersten Leistungselektronikteilende, insbesondere mindestens, bis zum zweiten Zellblockende hin erstrecken, insbesondere und nicht darüber hinaus.

Zusätzlich oder alternativ kann der Leistungselektronikteil sich mit einem, insbesondere von dem ersten verschiedenen, zweiten Leistungselektronikteilende bis zu maximal einer Hälfte, insbesondere maximal einem Viertel, einer, insbesondere geraden, Strecke vom zweiten Zellblockende entgegen der ersten Richtung zum ersten Zellblockende. erstrecken

Dies ermöglicht einen platzsparenden Aufbau.

Insbesondere kann das zweite Messelektronikteilende dem ersten Messelektronikteilende gegenüberliegend beziehungsweise abgewandt sein. Zusätzlich oder alternativ kann das zweite Leistungselektronikteilende dem ersten Leistungselektronikteilende gegenüberliegend beziehungsweise abgewandt sein.

In einer Weiterbildung der Erfindung weist die Elektronikeinheit, insbesondere mindestens, eine Leiterplatte auf. Die Leiterplatte trägt den Messelektronikteil. Die Leiterplatte ist mit einer Leiterplattenebene parallel zu der ersten Zellblockseite und/oder orthogonal zu der zweiten Richtung räumlich angeordnet. Dies ermöglicht einen platzsparenden Aufbau. Zusätzlich oder alternativ kann die Leiterplatte den Leistungselektronikteil tragen.

In einer Ausgestaltung der Erfindung weist die Elektronikeinheit eine, insbesondere die, gemeinsame Leiterplatte auf. Die gemeinsame Leiterplatte trägt den Messelektronikteil und den Leistungselektronikteil. Insbesondere kann der Akkupack, insbesondere die Elektronikeinheit, nur eine einzige Leiterplatte aufweisen.

In einer Weiterbildung der Erfindung sind die Akkumulatorzellen, insbesondere längliche, Rundzellen. Die Rundzellen sind jeweils mit einer Rundzellenlängsachse nicht-parallel, insbesondere orthogonal, zur ersten Richtung und/oder zur zweiten Richtung und/oder in einer zur ersten und zweiten, nicht-parallelen, insbesondere orthogonalen, dritten, insbesondere geraden, Richtung räumlich angeordnet.

Zusätzlich oder alternativ ist mindestens ein Teil der Akkumulatorzellen, insbesondere von der ersten Zellblockseite, in der zweiten Richtung, insbesondere zu der zweiten Zellblockseite, aufeinanderfolgend beziehungsweise nacheinander räumlich angeordnet, insbesondere und elektrisch parallel geschaltet.

Zusätzlich oder alternativ ist der Zellblock quaderförmig.

Dies ermöglicht eine relativ einfache Verschaltung der Akkumulatorzellen und/oder einen platzsparenden Aufbau.

Insbesondere kann eine, insbesondere jeweilige, Länge der Rundzellen größer als ein, insbesondere jeweiliger, Durchmesser der Rundzellen sein. Zusätzlich oder alternativ kann der Zellblock in der zweiten Richtung minimal zwei und/oder maximal fünf Akkumulatorzellen aufweisen. Weiter zusätzlich oder alternativ kann eine, insbesondere die, Länge des Zellblocks in der ersten Richtung größer als, insbesondere mindestens doppelt so groß wie, eine Höhe des Zellblocks in der dritten Richtung sein. Weiter zusätzlich oder alternativ kann der Zellblock eine, insbesondere die, Höhe in der dritten Richtung von minimal drei cm, insbesondere von minimal fünf cm, und/oder von maximal zwanzig cm, insbesondere von maximal fünfzehn cm, aufweisen.

In einer Weiterbildung der Erfindung weist der Akkupack mindestens einen weiteren Zellblock auf. Der mindestens eine weitere Zellblock ist auf der zweiten Zellblockseite in der zweiten Richtung räumlich angeordnet.

Zusätzlich weist der Akkupack mindestens eine weitere erste elektrische Leistungsleitung, insbesondere Leistungskabel, und mindestens eine weitere, insbesondere von der ersten verschiedene, zweite elektrische Leistungsleitung, insbesondere Leistungskabel, auf, insbesondere für die elektrische Antriebsleistung. Die mindestens eine weitere zweite elektrische Leistungsleitung ist mit, insbesondere mindestens, einer der Akkumulatorzellen des mindestens einen weiteren Zellblocks am zweiten Zellblockende elektrisch verbunden. Die mindestens eine weitere erste elektrische Leistungsleitung verläuft am zweiten Zellblockende des Zellblocks von der ersten Zellblockseite des Zellblocks in der zweiten Richtung mindestens zu der zweiten Zellblockseite des Zellblocks und, insbesondere auf einer zweiten Zellblockseite des mindestens einen weiteren Zellblocks, entgegen der ersten Richtung zum ersten Zellblockende des mindestens einen weiteren Zellblocks und ist mit, insbesondere mindestens, einer der Akkumulatorzellen des mindestens einen weiteren Zellblocks am ersten Zellblockende elektrisch verbunden.

Zusätzlich oder alternativ kann, insbesondere mindestens, eine der Akkumulatorzellen des mindestens einen weiteren Zellblocks an einem ersten Zellblockende des mindestens einen weiteren Zellblocks auf, insbesondere dem, Massepotential liegen, insbesondere und, insbesondere mindestens, eine, insbesondere andere, der Akkumulatorzellen des mindestens einen weiteren Zellblocks an einem zweiten Zellblockende des mindestens einen weiteren Zellblocks kann auf einem, insbesondere dem, Maximalpotential liegen.

Insbesondere können der Zellblock und der mindestens eine weitere Zellblock gleich, insbesondere typ- und/oder baugleich, sein. Zusätzlich oder alternativ kann nicht ein weiterer Zellblock oder braucht kein weiterer Zellblock auf der ersten Zellblockseite entgegen der zweiten Richtung räumlich angeordnet sein. Weiter zusätzlich oder alternativ können das erste Zellblockende des Zellblocks und das erste Zellblockende des mindestens einen weiteren Zellblocks beieinander räumlich angeordnet sein. Weiter zusätzlich oder alternativ können das zweite Zellblockende des Zellblocks und das zweite Zellblockende des mindestens einen weiteren Zellblocks beieinander räumlich angeordnet sein. Weiter zusätzlich oder alternativ kann oder braucht nicht der Messelektronikteil mit der mindestens einen weiteren ersten elektrischen Leistungsleitung und der mindestens einen weiteren zweiten elektrischen Leistungsleitung, soweit vorhanden, elektrisch verbunden sein, insbesondere unmittelbar. Weiter zusätzlich oder alternativ kann die mindestens eine weitere zweite elektrische Leistungsleitung nur am zweiten Zellblockende verlaufen. Weiter zusätzlich oder alternativ kann die mindestens eine weitere erste elektrische Leistungsleitung am ersten Zellblockende, insbesondere von der zweiten Zellblockseite, entgegen oder in der zweiten Richtung verlaufen. Weiter zusätzlich oder alternativ kann der Leistungselektronikteil mit der mindestens einen weiteren ersten elektrischen Leistungsleitung und der mindestens einen weiteren zweiten elektrischen Leistungsleitung elektrisch verbunden sein, insbesondere unmittelbar.

In einer Weiterbildung der Erfindung ist eine maximale elektrische Antriebsleistung, insbesondere des Akkupacks, minimal 50 Watt (W) und/oder maximal 5 Kilowatt (kW).

Zusätzlich oder alternativ ist das Maximalpotential, insbesondere des Akkupacks, minimal 10 Volt (V), insbesondere minimal 20 V, und/oder maximal 500 V, insbesondere maximal 100 V.

Zusätzlich oder alternativ ist ein maximaler Energieinhalt, insbesondere des Akkupacks, minimal 80 Wattstunden (Wh) und/oder maximal 5 Kilowattstunden (kWh).

Das erfindungsgemäße Garten- und/oder Forstbearbeitungssystem weist einen, insbesondere den, Akkupack wie zuvor beschrieben und ein elektrisch angetriebenes Garten- und/oder Forstbearbeitungsgerät auf. Der Akkupack und das elektrisch angetriebene Garten- und/oder Forstbearbeitungsgerät sind zur elektrischen Verbindung miteinander zur, insbesondere automatischen, Versorgung des elektrisch angetriebenen Garten- und/oder Forstbearbeitungsgeräts mit elektrischer Antriebsleistung von dem Akkupack ausgebildet beziehungsweise konfiguriert.

Insbesondere kann das Garten- und/oder Forstbearbeitungsgerät einen Elektroantriebsmotor aufweisen. Zusätzlich oder alternativ kann das Garten- und/oder Forstbearbeitungsgerät ein handgeführtes, insbesondere handgetragenes oder bodengeführtes, Garten- und/oder Forstbearbeitungsgerät sein. Insbesondere handgeführtes, insbesondere handgetragenes, Garten- und/oder Forstbearbeitungsgerät kann bedeuten, dass das Garten- und/oder Forstbearbeitungsgerät eine Masse von maximal 50 kg, insbesondere von maximal 20 kg, insbesondere von maximal 10 kg, aufweisen kann. Weiter zusätzlich oder alternativ können der Akkupack und das Garten- und/oder Forstbearbeitungsgerät zur, insbesondere werkzeugfrei und/oder zerstörungsfrei, lösbaren elektrischen Verbindung miteinander ausgebildet beziehungsweise konfiguriert sein, insbesondere mittels Steckverbinder. Weiter zusätzlich oder alternativ können der Akkupack und das Garten- und/oder Forstbearbeitungsgerät zur, insbesondere werkzeugfrei und/oder zerstörungsfrei, insbesondere lösbaren, mechanischen Verbindung miteinander ausgebildet beziehungsweise konfiguriert sein. Insbesondere kann das Garten- und/oder Forstbearbeitungsgerät zum Tragen des Akkupacks ausgebildet beziehungsweise konfiguriert sein. Weiter zusätzlich oder alternativ kann ein, insbesondere der, Kurzschluss durch das Garten- und/oder Forstbearbeitungsgerät verursacht sein.

In einer Weiterbildung der Erfindung weist das Garten- und/oder Forstbearbeitungssystem eine Rückentragvorrichtung auf. Die Rückentragvorrichtung ist zum Tragen des Akkupacks ausgebildet beziehungsweise konfiguriert, insbesondere auf einem Rücken eines Benutzers. Insbesondere können die Rückentragvorrichtung und der Akkupack zur, insbesondere werkzeugfrei und/oder zerstörungsfrei, insbesondere lösbaren, mechanischen Verbindung miteinander ausgebildet beziehungsweise konfiguriert sein. Zusätzlich oder alternativ kann das Garten- und/oder Forstbearbeitungssystem, insbesondere die Rückentragvorrichtung, ein elektrisches Verbindungskabel zur elektrischen Verbindung des Akkupacks und des Garten- und/oder Forstbearbeitungsgeräts miteinander aufweisen.

In einer Weiterbildung der Erfindung ist das elektrisch angetriebene Garten- und/oder Forstbearbeitungsgerät eine Säge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer oder eine Grasschere.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Perspektivansicht eines erfindungsgemäßen Akkupacks mit Steckverbindern und ohne Gehäuse,
- Fig. 2: eine weitere Perspektivansicht des Akkupacks der Fig. 1 mit Steckverbindern, ohne Zellblöcke und ohne Gehäuse,
- Fig. 3: eine weitere Perspektivansicht von einer gegenüberliegenden Seite des Akkupacks der Fig. 1 mit Steckverbindern und ohne Gehäuse,
- Fig. 4a: eine Schnittansicht in einer ersten Richtung und in einer zweiten Richtung des Akkupacks der Fig. 1 ohne Steckverbinder und ohne Gehäuse,
- Fig. 4b: eine weitere Schnittansicht in einer ersten Richtung und in einer dritten Richtung des Akkupacks der Fig. 1 ohne Gehäuse,
- Fig. 5: eine Draufsicht auf eine Elektronikeinheit des Akkupacks der Fig. 1 mit Steckverbindern,
- Fig. 6: eine weitere Perspektivansicht des Akkupacks der Fig. 1 mit einem Gehäuse,
- Fig. 7: eine Perspektivansicht eines erfindungsgemäßen Garten- und/oder Forstbearbeitungssystems aufweisend den Akkupack der Fig. 1 und ein elektrisch angetriebenes Garten- und/oder Forstbearbeitungsgerät in Form eines Rasenmähers, und
- Fig. 8: eine weitere Perspektivansicht des Garten- und/oder Forstbearbeitungssystems der Fig. 7 aufweisend ein weiteres elektrisch angetriebenes Garten- und/oder Forstbearbeitungsgerät in Form eines Blasgeräts und eine Rückentragvorrichtung zum Tragen des Akkupacks der Fig. 1.

### DETAILLIERTE BESCHREIBUNG DER AUSFÜHRUNGSBEISPIELE

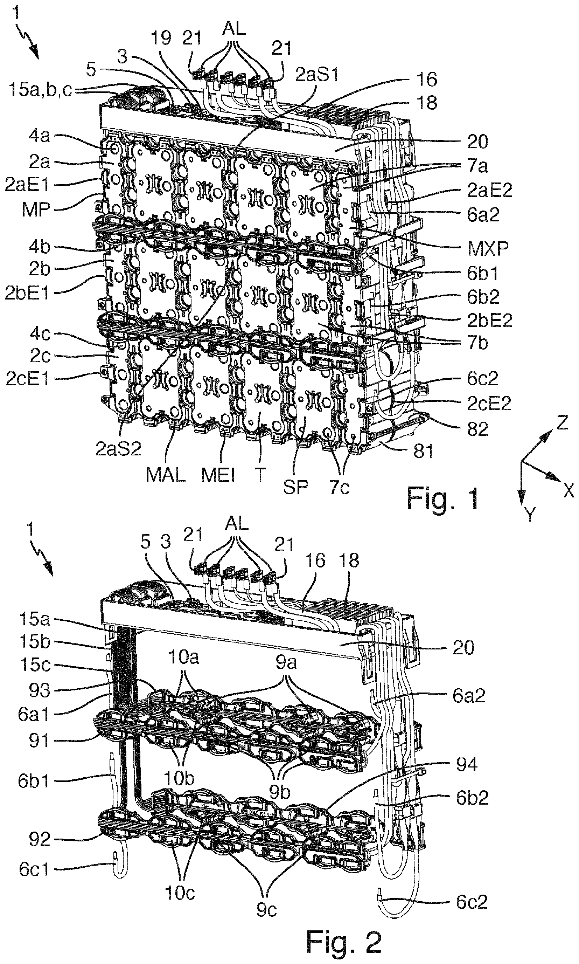

Fig. 1 bis 8 zeigen einen erfindungsgemäßen Akkupack 1 zur Versorgung eines elektrisch angetriebenen Garten- und/oder Forstbearbeitungsgeräts 101 mit elektrischer Antriebsleistung AL. Der Akkupack 1 weist einen Zellblock 2a und eine Elektronikeinheit 3 auf. Der Zellblock 2a weist eine Mehrzahl von Akkumulatorzellen 4a auf. Mindestens ein Teil der Akkumulatorzellen 4a ist von einem ersten Zellblockende 2aE1 des Zellblocks 2a in mindestens einer ersten Richtung x zu einem zweiten Zellblockende 2aE2 des Zellblocks 2a aufeinanderfolgend räumlich angeordnet und elektrisch in Reihe geschaltet. Die Elektronikeinheit 3 weist einen Messelektronikteil 5 auf.

Zusätzlich liegt, insbesondere mindestens, eine der Akkumulatorzellen 4a, insbesondere ihr Minuspol, am ersten Zellblockende 2aE1 auf Massepotential MP, insbesondere auf 0 V. Der Messelektronikteil 5 ist im Bereich des ersten Zellblockendes 2aE1 räumlich angeordnet.

Des Weiteren liegt, insbesondere mindestens, eine der Akkumulatorzellen 4a, insbesondere ihr Pluspol, am zweiten Zellblockende 2aE2 auf einem Maximalpotential MXP, im gezeigten Ausführungsbeispiel auf maximal 42 V. In alternativen Ausführungsbeispielen kann das Maximalpotential minimal 10 V und/oder maximal 500 V sein.

Zusätzlich oder alternativ weist der Akkupack 1 eine erste elektrische Leistungsleitung 6a1 und eine zweite elektrische Leistungsleitung 6a2 auf. Die zweite elektrische Leistungsleitung 6a2 ist mit, insbesondere mindestens, einer der Akkumulatorzellen 4a am zweiten Zellblockende 2aE2 elektrisch verbunden. Die erste elektrische Leistungsleitung 6a1 verläuft am zweiten Zellblockende 2aE2 von einer ersten Zellblockseite 2aS1 des Zellblocks 2a in einer zur ersten nicht-parallelen, insbesondere orthogonalen, zweiten Richtung y zu einer der ersten gegenüberliegenden und/oder parallelen, zweiten Zellblockseite 2aS2 des Zellblocks 2a und auf der zweiten Zellblockseite 2aS2 entgegen der ersten Richtung x zum ersten Zellblockende 2aE1 und ist mit, insbesondere mindestens, einer der Akkumulatorzellen 4a am ersten Zellblockende 2aE1 elektrisch verbunden. Der Messelektronikteil ist auf der ersten Zellblockseite 2aS1 vom zweiten Zellblockende 2aE2 entgegen der ersten Richtung x beabstandet räumlich angeordnet.

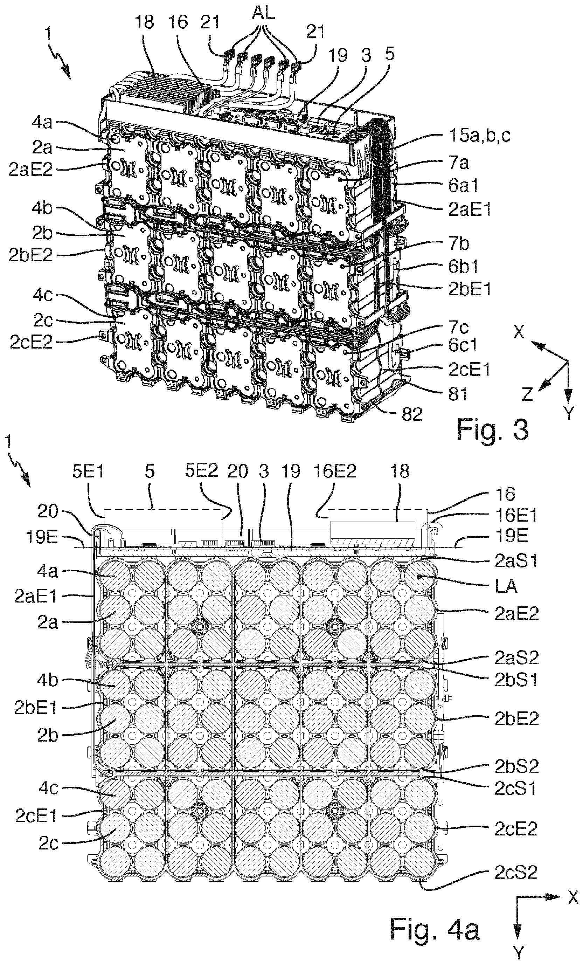

Außerdem verläuft die erste elektrische Leistungsleitung 6a1 am ersten Zellblockende 2aE1 von der zweiten Zellblockseite 2aS2 entgegen der zweiten Richtung y, wie in Fig. 2 und 3 gezeigt.

Weiter weist der Akkupack 1 mindestens einen weiteren Zellblock 2b, 2c auf. Der mindestens eine weitere Zellblock 2b, 2c ist auf der zweiten Zellblockseite 2aS2 in der zweiten Richtung y räumlich angeordnet.

Im gezeigten Ausführungsbeispiel weist der Akkupack 1 zwei weitere Zellblöcke 2b, 2c auf. In alternativen Ausführungsbeispielen kann der Akkupack keinen weiteren Zellblock, nur einen einzigen weiteren Zellblock oder mindestens drei weitere Zellblöcke aufweisen.

Im Detail ist der weitere Zellblock 2b mit einer ersten Zellblockseite 2bS1 auf der zweiten Zellblockseite 2aS2 des Zellblocks 2a in der zweiten Richtung y räumlich angeordnet, insbesondere parallel zu der zweiten Zellblockseite 2aS2. Zudem ist der weitere Zellblock 2c mit einer ersten Zellblockseite 2cS1 auf einer zweiten Zellblockseite 2bS2 des Zellblocks 2b in der zweiten Richtung y räumlich angeordnet, insbesondere parallel zu der zweiten Zellblockseite 2bS2.

Zusätzlich liegt, insbesondere mindestens, eine der Akkumulatorzellen 4b, 4c, insbesondere ihr Minuspol, des mindestens einen weiteren Zellblocks 2b, 2c an einem ersten Zellblockende 2bE1, 2cE1 des mindestens einen weiteren Zellblocks 2b, 2c auf dem Massepotential MP.

Des Weiteren liegt, insbesondere mindestens, eine der Akkumulatorzellen 4b, 4c, insbesondere ihr Pluspol, des mindestens einen weiteren Zellblocks 2b, 2c an einem zweiten Zellblockende 2bE1, 2cE1 des mindestens einen weiteren Zellblocks 2b, 2c auf dem Maximalpotential MXP. Zusätzlich oder alternativ weist der Akkupack 1 mindestens eine weitere erste elektrische Leistungsleitung 6b1, 6c1 und mindestens eine weitere zweite elektrische Leistungsleitung 6b2, 6c2 auf. Die mindestens eine weitere zweite elektrische Leistungsleitung 6b2, 6c2 ist mit, insbesondere mindestens, einer der Akkumulatorzellen 4b, 4c des mindestens einen weiteren Zellblocks 2b, 2c am zweiten Zellblockende 2bE2, 2cE2 elektrisch verbunden. Die mindestens eine weitere erste elektrische Leistungsleitung 6b1, 6c1 verläuft am zweiten Zellblockende 2aE2 des Zellblocks 2a von der ersten Zellblockseite 2aS1 des Zellblocks 2a in der zweiten Richtung y mindestens zu der zweiten Zellblockseite 2aS2 des Zellblocks 2a und, insbesondere auf der zweiten Zellblockseite 2bS2 des mindestens einen weiteren Zellblocks 2b, entgegen der ersten Richtung x zum ersten Zellblockende 2bE1, 2cE1 des mindestens einen weiteren Zellblocks 2b, 2c und ist mit, insbesondere mindestens, einer der Akkumulatorzellen 4b, 4c des mindestens einen weiteren Zellblocks 2b, 2c am ersten Zellblockende 2bE1, 2cE1 elektrisch verbunden.

Im Detail sind das erste Zellblockende 2aE1 des Zellblocks 2a und das erste Zellblockende 2bE1, 2cE1 des mindestens einen weiteren Zellblocks 2b, 2c beieinander räumlich angeordnet. Außerdem sind das zweite Zellblockende 2aE2 des Zellblocks 2a und das zweite Zellblockende 2bE2, 2cE2 des mindestens einen weiteren Zellblocks 2b, 2c beieinander räumlich angeordnet.

Weiter verläuft die weitere erste elektrische Leistungsleitung 6b1 auf der zweiten Zellblockseite 2bS2 des weiteren Zellblocks 2b und auf der ersten Zellblockseite 2cS1 des weiteren Zellblocks 2c entgegen der ersten Richtung x zum ersten Zellblockende 2bE1 und am ersten Zellblockende 2bE1 entgegen der zweiten Richtung y, wie in Fig. 2 und 3 gezeigt. Zudem verläuft die weitere erste elektrische Leistungsleitung 6c1 auf der zweiten Zellblockseite 2bS2 des weiteren Zellblocks 2b und auf der ersten Zellblockseite 2cS1 des weiteren Zellblocks 2c entgegen der ersten Richtung x zum ersten Zellblockende 2cE1 und am ersten Zellblockende 2cE1 in der zweiten Richtung y.

Des Weiteren sind die Akkumulatorzellen 4a, 4b, 4c, insbesondere längliche, Rundzellen. Die Rundzellen 4a, 4b, 4c sind jeweils mit einer Rundzellenlängsachse LA nicht-parallel, insbesondere orthogonal, zur ersten Richtung x und/oder zur zweiten Richtung y und/oder in einer zur ersten und zweiten, nicht-parallelen, insbesondere orthogonalen, dritten Richtung z räumlich angeordnet, wie in Fig. 1, 3, 4a und 4b gezeigt.

Zusätzlich oder alternativ ist mindestens ein Teil der Akkumulatorzellen 4a, 4b, 4c in der zweiten Richtung y aufeinanderfolgend räumlich angeordnet, insbesondere und elektrisch parallel geschaltet, wie in Fig. 1 und 3 gezeigt.

Zusätzlich oder alternativ ist der Zellblock 2a, 2b, 2c quaderförmig.

Im gezeigten Ausführungsbeispiel weist der, insbesondere mindestens eine weitere, Zellblock 2a, 2b, 2c eine Länge in der ersten Richtung x von 27 cm auf. Außerdem weist der, insbesondere mindestens eine weitere, Zellblock 2a, 2b, 2c eine Breite in der zweiten Richtung y von 9 cm auf. Weiter weist der, insbesondere mindestens eine weitere, Zellblock 2a, 2b, 2c eine Höhe in der dritten Richtung z von 8 cm auf.

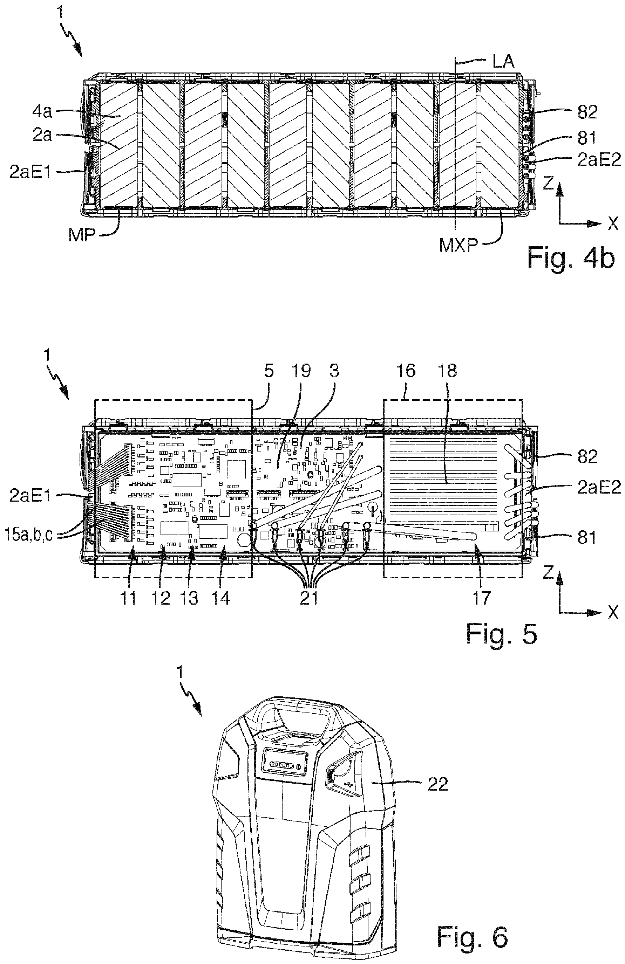

Zudem weist im gezeigten Ausführungsbeispiel der, insbesondere mindestens eine weitere, Zellblock 2a, 2b, 2c in der ersten Richtung x zehn Akkumulatorzellen 4a, 4b, 4c auf, wie in Fig. 4a und 4b gezeigt. Des Weiteren weist der, insbesondere mindestens eine weitere, Zellblock 2a, 2b, 2c in der zweiten Richtung y drei Akkumulatorzellen 4a, 4b, 4c auf.

Außerdem sind im gezeigten Ausführungsbeispiel die Akkumulatorzellen 4a, 4b, 4c mittels Zellverbinder 7a, 7b, 7c, insbesondere in Form von Zellverbinderblechen, elektrisch in Reihe und parallel geschaltet, wie in Fig. 1 und 3 gezeigt.

Im Detail sind die, insbesondere mindestens eine weitere, erste elektrische Leistungsleitung 6a1, 6b1, 6c1 und die, insbesondere mindestens eine weitere, zweite elektrische Leistungsleitung 6a2, 6b2, 6c2, insbesondere jeweils, mit einem der Zellverbinder 7a, 7b, 7c elektrisch verbunden.

Im gezeigten Ausführungsbeispiel ist eine maximale elektrische Antriebsleistung MAL, insbesondere des Akkupacks 1, minimal 50 W und/oder maximal 5 kW.

Weiter ist im gezeigten Ausführungsbeispiel ein maximaler Energieinhalt MEI, insbesondere des Akkupacks 1, 1,5 kWh. In alternativen Ausführungsbeispielen kann ein maximaler Energieinhalt minimal 80 Wh und/oder maximal 5 kWh sein.

Zudem weist im gezeigten Ausführungsbeispiel der Akkupack 1 mindestens einen Zellhalter 81, 82 auf, wobei der, insbesondere mindestens eine weitere, Zellblock 2a, 2b, 2c beziehungsweise die Akkumulatorzellen 4a, 4b, 4c durch den mindestens einen Zellhalter 81, 82 zusammengehalten ist beziehungsweise sind.

Im Detail sind die Zellverbinder 7a, 7b, 7c an, insbesondere in, dem mindestens einen Zellhalter 81, 82 montiert.

Des Weiteren sind die, insbesondere mindestens eine weitere, erste elektrische Leistungsleitung 6a1, 6b1, 6c1 und die, insbesondere mindestens eine weitere, zweite elektrische Leistungsleitung 6a2, 6b2, 6c2 an, insbesondere in, dem mindestens einen Zellhalter 81, 82 montiert beziehungsweise über den mindestens einen Zellhalter 81, 82 verlegt.

Außerdem ist der Messelektronikteil 5 zur Messung von mindestens einer Eigenschaft, insbesondere einer Temperatur T und/oder einer Spannung SP, insbesondere einer Mittelspannung, von einer oder mehrerer der Akkumulatorzellen 4a, 4b, 4c ausgebildet.

Im gezeigten Ausführungsbeispiel weist der Akkupack 1, insbesondere die Elektronikeinheit 3, Temperatursensorelemente 9a, 9b, 9c, insbesondere in Form von Thermistoren, und/oder Spannungsabgriffelemente 10a, 10b, 10c, insbesondere Mittelspannungsabgriffelemente, insbesondere in Form von Kontaktzungen, auf. Die Temperatursensorelemente 9a, 9b ,9c und/oder die Spannungsabgriffelemente 10a, 10b, 10c sind an einer oder mehrerer der Akkumulatorzellen 4a, 4b, 4c räumlich angeordnet, insbesondere an, insbesondere in, dem mindestens einen Zellhalter 81, 82 montiert. Insbesondere sind die Spannungsabgriffelemente 10a, 10b, 10c an, insbesondere in, mindestens einem Vormontagekörper 91, 92, 93, 94 montiert und der mindestens eine Vormontagekörper 91, 92, 93, 94 ist an dem mindestens einen Zellhalter 81, 82 montiert. Weiter sind die Spannungsabgriffelemente 10a, 10b, 10c, insbesondere jeweils, mit einem der Zellverbinder 7a, 7b, 7c elektrisch verbunden.

Im Detail weist der Messelektronikteil 5 mindestens einen Spannungsteiler 11 und/oder mindestens einen Kondensator 12 und/oder mindestens einen Operationsverstärker 13 und/oder mindestens einen Mikrocontroller 14 auf, wie in Fig. 5 gezeigt.

Zudem weist der Akkupack eine Anzahl, im gezeigten Ausführungsbeispiel eine Mehrzahl, von Messleitungen 15a, 15b, 15c auf. Der Messelektronikteil 5 ist mit der Anzahl von Messleitungen 15a, 15b, 15c elektrisch verbunden. Die Anzahl von Messleitungen 15a, 15b, 15c verläuft am ersten Zellblockende 2aE1 von der ersten Zellblockseite 2aS1 des Zellblocks 2a in der zweiten Richtung y zu den Akkumulatorzellen 4a, 4b, 4c.

Des Weiteren verläuft mindestens eine der Anzahl von Messleitungen 15a, 15b auf der zweiten Zellblockseite 2aS2 des Zellblocks 2a und auf der ersten Zellblockseite 2bS1 des weiteren Zellblocks 2b von dem ersten Zellblockende 2aE1, 2bE1 in der ersten Richtung x, wie in Fig. 2 und 3 gezeigt. Außerdem verläuft mindestens eine der Anzahl von Messleitungen 15b, 15c auf der zweiten Zellblockseite 2bS2 des weiteren Zellblocks 2b und auf der ersten Zellblockseite 2cS1 des weiteren Zellblocks 2bc von dem ersten Zellblockende 2bE1, 2cE1 in der ersten Richtung x.

Im Detail ist die Anzahl von Messleitungen 15a, 15b, 15c an, insbesondere in, dem mindestens einen Zellhalter 81, 82 montiert beziehungsweise über den mindestens einen Zellhalter 81, 82 verlegt, insbesondere und an, insbesondere in, dem mindestens einen Vormontagekörper 91, 92, 93, 94 montiert beziehungsweise über den mindestens einen Vormontagekörper 91, 92, 93, 94 verlegt.

Weiter ist ein Teil der Anzahl von Messleitungen 15a, 15b, 15c mit, insbesondere mindestens, einer der Akkumulatorzellen 4a, 4b, 4c elektrisch verbunden, insbesondere mittels, insbesondere jeweils, eines der Zellverbinder 7a, 7b, 7c und eines der Spannungsabgriffelemente 10a, 10b 10c.

Zudem ist der Messelektronikteil 5 mittels der Anzahl von Messleitungen 15a, 15b, 15c mit den Temperatursensorelementen 9a, 9b ,9c und/oder den Spannungsabgriffelementen 10a, 10b, 10c elektrisch verbunden.

Des Weiteren weist die Elektronikeinheit einen Leistungselektronikteil 16 auf.

Zusätzlich ist der Leistungselektronikteil 16 im Bereich des zweiten Zellblockendes 2aE2 räumlich angeordnet.

Zusätzlich oder alternativ ist der Leistungselektronikteil 16 mit der ersten elektrischen Leistungsleitung 6a1 und der zweiten elektrischen Leistungsleitung 6a2 elektrisch verbunden und, insbesondere auf der ersten Zellblockseite 2aS1, vom ersten Zellblockende 2aE1 und/oder vom Messelektronikteil 5 in der ersten Richtung x beabstandet räumlich angeordnet.

Außerdem ist der Leistungselektronikteil 16 mit der mindestens einen weiteren ersten elektrischen Leistungsleitung 6b1, 6c1 und der mindestens einen weiteren zweiten elektrischen Leistungsleitung 6b2, 6c2 elektrisch verbunden.

Im Detail ist der Leistungselektronikteil 16 zur Umformung und/oder zur Schaltung der elektrischen Antriebsleistung AL ausgebildet, insbesondere weist der Leistungselektronikteil 16 mindestens einen Leistungsschalter 17 auf.

Weiter weist die Elektronikeinheit 3 einen Kühlkörper 18 zur Kühlung des Leistungselektronikteils 16, insbesondere des mindestens einen Leistungsschalters 17, auf.

Im gezeigten Ausführungsbeispiel erstreckt der Messelektronikteil 5 sich mit einem ersten Messelektronikteilende 5E1 bis zum ersten Zellblockende 2aE1 hin.

Zusätzlich oder alternativ erstreckt der Messelektronikteil 5 sich mit einem zweiten Messelektronikteilende 5E2 bis zu maximal einer Hälfte, insbesondere maximal einem Viertel, einer Strecke vom ersten Zellblockende 2aE1 in der ersten Richtung x zum zweiten Zellblockende 2aE2.

Zusätzlich oder alternativ erstreckt der Leistungselektronikteil 16 sich mit einem ersten Leistungselektronikteilende 16E1 bis zum zweiten Zellblockende hin 2aE2.

Zusätzlich oder alternativ erstreckt der Leistungselektronikteil 16 sich mit einem zweiten Leistungselektronikteilende 16E2 bis zu maximal einer Hälfte, insbesondere maximal einem Viertel, einer Strecke vom zweiten Zellblockende 2aE2 entgegen der ersten Richtung x zum ersten Zellblockende 2aE1.

Zudem weist die Elektronikeinheit 3 eine gemeinsame Leiterplatte 19 auf. Die gemeinsame Leiterplatte 19 trägt den Messelektronikteil 5 und den Leistungselektronikteil 16. Die gemeinsame Leiterplatte 19 ist mit einer Leiterplattenebene 19E parallel zu der ersten Zellblockseite 2aS1 und/oder orthogonal zu der zweiten Richtung y räumlich angeordnet.

Im gezeigten Ausführungsbeispiel weist die Elektronikeinheit 3 einen Vergussbecher 20 auf. Die gemeinsame Leiterplatte 19 mit dem Messelektronikteil 5 und dem Leistungselektronikteil 16 ist in dem Vergussbecher 20 räumlich angeordnet und mittels einer Vergussmasse vergossen, insbesondere zum Schutz vor Feuchtigkeit. Insbesondere ist der Kühlkörper 18 mindestens teilweise nicht vergossen. Des Weiteren berührt der Vergussbecher 20 den Zellblock 2a beziehungsweise den mindestens einen Zellhalter 81, 82.

Außerdem weist im gezeigten Ausführungsbeispiel der Akkupack 1, insbesondere die Elektronikeinheit 3, Steckverbinder 21 auf, insbesondere zur elektrischen Verbindung des Akkupacks 1 mit dem Garten- und/oder Forstbearbeitungsgerät 101.

Weiter weist im gezeigten Ausführungsbeispiel der Akkupack 1 ein gemeinsames Gehäuse 22, insbesondere Schutzgehäuse, auf, wie in Fig. 6 gezeigt. Der Zellblock 2a, die Elektronikeinheit 3, die erste elektrische Leistungsleitung 6a1 und die zweite elektrische Leistungsleitung 6a2 sind in dem gemeinsamen Gehäuse 22 räumlich angeordnet. Zudem sind in dem gemeinsamen Gehäuse 22 die weiteren Zellblöcke 2b, 2c, die Akkumulatorzellen 4a, 4b, 4c, der Messelektronikteil 5, die mindestens eine weitere erste elektrische Leistungsleitung 6b1, 6c1, die mindestens eine weitere zweite elektrische Leistungsleitung 6b2, 6c2, die Zellverbinder 7a, 7b, 7c, der mindestens eine Zellhalter 81, 82, die Temperatursensorelemente 9a, 9b ,9c, die Spannungsabgriffelemente 10a, 10b, 10c, der mindestens eine Vormontagekörper 91, 92, 93, 94, der mindestens eine Spannungsteiler 11, der mindestens eine Kondensator 12, der mindestens eine Operationsverstärker 13, der mindestens eine Mikrocontroller 14, die Anzahl von Messleitungen 15a, 15b, 15c, der Leistungselektronikteil 16, der mindestens eine Leistungsschalter 17, der Kühlkörper 18, die gemeinsame Leiterplatte 19, der Vergussbecher 20 und die Steckverbinder 21 räumlich angeordnet.

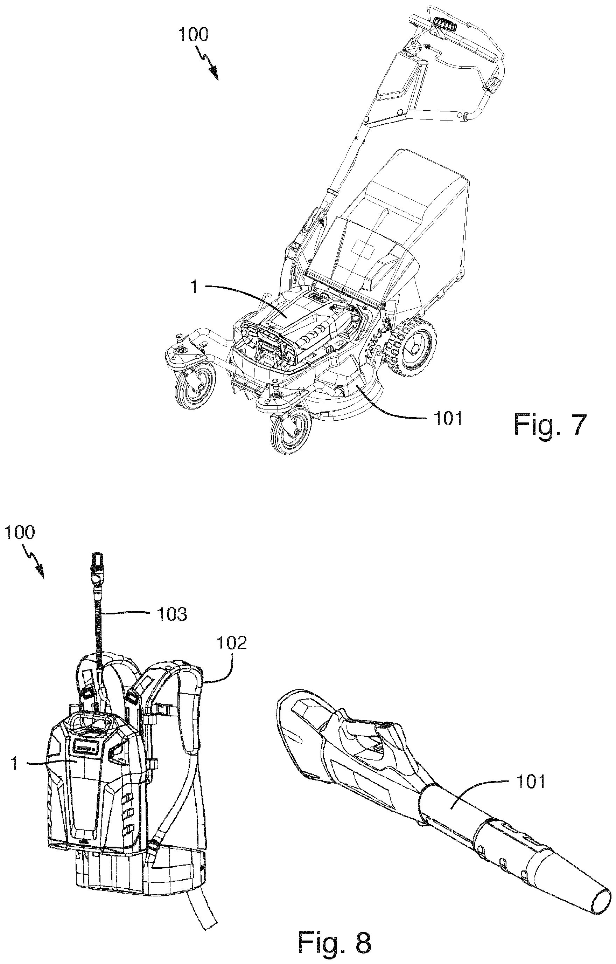

Fig. 7 und 8 zeigen ein erfindungsgemäßes Garten- und/oder Forstbearbeitungssystem 100. Das Garten- und/oder Forstbearbeitungssystem 100 weist den Akkupack 1 und das elektrisch angetriebene Garten- und/oder Forstbearbeitungsgerät 101 auf. Der Akkupack 1 und das elektrisch angetriebene Garten- und/oder Forstbearbeitungsgerät 101 sind zur elektrischen Verbindung miteinander zur Versorgung des elektrisch angetriebenen Garten- und/oder Forstbearbeitungsgeräts 101 mit elektrischer Antriebsleistung AL von dem Akkupack 1 ausgebildet.

Im gezeigten Ausführungsbeispiel weist das Garten- und/oder Forstbearbeitungssystem 100 zwei Garten- und/oder Forstbearbeitungsgeräte 101 auf. In alternativen Ausführungsbeispielen kann das Garten- und/oder Forstbearbeitungssystem nur ein einziges Garten- und/oder Forstbearbeitungsgerät oder mindestens drei Garten- und/oder Forstbearbeitungsgeräte aufweisen.

In Fig. 7 ist das Garten- und/oder Forstbearbeitungsgerät 101 ein Rasenmäher. In Fig. 8 ist das Garten- und/oder Forstbearbeitungsgerät 101 ein Blasgerät. In alternativen Ausführungsbeispielen kann das Garten- und/oder Forstbearbeitungsgerät eine Säge, ein Hoch-Entaster, ein Freischneider, eine Heckenschere, ein Heckenschneider, ein Laubbläser, eine Astschere, ein Trennschleifer, ein Kehrgerät, eine Kehrwalze, eine Kehrbürste, ein Vertikutierer oder eine Grasschere sein.

Der Rasenmäher 101 ist zum Tragen des Akkupacks 1 ausgebildet.

Des Weiteren weist das Garten- und/oder Forstbearbeitungssystem 100 eine Rückentragvorrichtung 102 auf. Die Rückentragvorrichtung 102 ist zum Tragen des Akkupacks 1 ausgebildet.

Zusätzlich weist das Garten- und/oder Forstbearbeitungssystem 100, insbesondere die Rückentragvorrichtung 102, ein elektrisches Verbindungskabel 103 zur elektrischen Verbindung des Akkupacks 1 und des Garten- und/oder Forstbearbeitungsgeräts 101, in Fig. 8 des Blasgeräts, miteinander auf.

Wie die gezeigten und oben erläuterten Ausführungsbeispiele deutlich machen, stellt die Erfindung einen Akkupack zur Versorgung eines elektrisch angetriebenen Garten- und/oder Forstbearbeitungsgeräts mit elektrischer Antriebsleistung, wobei der Akkupack relativ unempfindlich gegen elektrische, insbesondere elektromagnetische, Störeinflüsse, insbesondere bei gleichzeitig platzsparendem Aufbau, ist, und ein Garten- und/oder Forstbearbeitungssystem aufweisend einen solchen Akkupack und ein elektrisch angetriebenes Garten- und/oder Forstbearbeitungsgerät bereit.

Die Zellverbinder, der mindestens eine Zellhalter, die Temperatursensorelemente, die Spannungsabgriffelemente, der mindestens eine Vormontagekörper und/oder die Anzahl von Messleitungen können/kann z.B. so sein, wie sie/er in den zeitgleich eingereichten europäischen Patentanmeldungen (unsere Akten P 57573 EP und P 57574 EP) der Anmelderin offenbart sind/ist, deren Offenbarungen hiermit durch Verweis in vollem Umfang zum Bestandteil der Offenbarung der vorliegenden Anmeldung gemacht wird.

## Patentansprüche

1. Akkupack (1) zur Versorgung eines elektrisch angetriebenen Garten- und/oder Forstbearbeitungsgeräts (101) mit elektrischer Antriebsleistung (AL), wobei der Akkupack (1) aufweist:
- einen Zellblock (2a), wobei der Zellblock (2a) eine Mehrzahl von Akkumulatorzellen (4a) aufweist, wobei mindestens ein Teil der Akkumulatorzellen (4a) von einem ersten Zellblockende (2aE1) des Zellblocks (2a) in mindestens einer ersten Richtung (x) zu einem zweiten Zellblockende (2aE2) des Zellblocks (2a) aufeinanderfolgend räumlich angeordnet und elektrisch in Reihe geschaltet ist, und
- eine Elektronikeinheit (3), wobei die Elektronikeinheit (3) einen Messelektronikteil (5) aufweist,
**dadurch gekennzeichnet**,
- dass der Akkupack (1) eine erste elektrische Leistungsleitung (6a1) und eine zweite elektrische Leistungsleitung (6a2) aufweist,
- wobei die zweite elektrische Leistungsleitung (6a2) mit einer der Akkumulatorzellen (4a) am zweiten Zellblockende (2aE2) elektrisch verbunden ist,
- wobei die erste elektrische Leistungsleitung (6a1) am zweiten Zellblockende (2aE2) von einer ersten Zellblockseite (2aS1) des Zellblocks (2a) in einer zur ersten nicht-parallelen, zweiten Richtung (y) zu einer der ersten gegenüberliegenden, zweiten Zellblockseite (2aS2) des Zellblocks (2a) und auf der zweiten Zellblockseite (2aS2) entgegen der ersten Richtung (x) zum ersten Zellblockende (2aE1) verläuft und mit einer der Akkumulatorzellen (4a) am ersten Zellblockende (2aE1) elektrisch verbunden ist,
und
- wobei der Messelektronikteil (5) auf der ersten Zellblockseite (2aS1) vom zweiten Zellblockende (2aE2) entgegen der ersten Richtung (x) beabstandet räumlich angeordnet ist.

2. Akkupack (1) nach Anspruch 1, **dadurch gekennzeichnet,**
- **dass** der Messelektronikteil (5) zur Messung von mindestens einer Eigenschaft, insbesondere einer Temperatur (T) und/oder einer Spannung (SP), insbesondere einer Mittelspannung, von einer oder mehrerer der Akkumulatorzellen (4a) ausgebildet ist.

3. Akkupack (1) nach einem der vorhergehenden Ansprüche, **dadurch gekennzeichnet,**
- **dass** der Messelektronikteil (5) mindestens einen Spannungsteiler (11) und/oder mindestens einen Kondensator (12) und/oder mindestens einen Operationsverstärker (13) und/oder mindestens einen Mikrocontroller (14) aufweist.

4. Akkupack (1) nach einem der vorhergehenden Ansprüche, **dadurch gekennzeichnet,**
- **dass** der Akkupack (1) eine Anzahl von Messleitungen (15a) aufweist,
- wobei der Messelektronikteil (5) mit der Anzahl von Messleitungen (15a) elektrisch verbunden ist, und
- wobei die Anzahl von Messleitungen (15a) am ersten Zellblockende (2aE1) von der ersten Zellblockseite (2aS1) des Zellblocks (2a) in der zweiten Richtung (y) zu den Akkumulatorzellen (4a) verläuft, insbesondere und mit einer der Akkumulatorzellen (4a) elektrisch verbunden ist.

5. Akkupack (1) nach einem der vorhergehenden Ansprüche, **dadurch gekennzeichnet,**
- **dass** die Elektronikeinheit (3) einen Leistungselektronikteil (16) aufweist,
- wobei der Leistungselektronikteil (16) mit der ersten elektrischen Leistungsleitung (6a1) und der zweiten elektrischen Leistungsleitung (6b1) elektrisch verbunden ist und, insbesondere auf der ersten Zellblockseite (2aS1), vom ersten Zellblockende (2aE1) und/oder vom Messelektronikteil (5) in der ersten Richtung (x) beabstandet räumlich angeordnet ist.

6. Akkupack (1) nach Anspruch 5, **dadurch gekennzeichnet,**
- **dass** der Leistungselektronikteil (16) zur Umformung und/oder zur Schaltung der elektrischen Antriebsleistung (AL) ausgebildet ist, insbesondere der Leistungselektronikteil (16) mindestens einen Leistungsschalter (17) aufweist.

7. Akkupack (1) nach einem der vorhergehenden Ansprüche, **dadurch gekennzeichnet,**
- **dass** der Messelektronikteil (5) sich mit einem ersten Messelektronikteilende (5E1) bis zum ersten Zellblockende (2aE1) hin erstreckt, und/oder
- **dass** der Messelektronikteil (5) sich mit einem zweiten Messelektronikteilende (5E2) bis zu maximal einer Hälfte, insbesondere maximal einem Viertel, einer Strecke vom ersten Zellblockende (2aE1) in der ersten Richtung (x) zum zweiten Zellblockende (2aE2) erstreckt.

8. Akkupack (1) nach einem der vorhergehenden Ansprüche, **dadurch gekennzeichnet,**
- **dass** die Elektronikeinheit (3) eine Leiterplatte (19) aufweist, wobei die Leiterplatte (19) den Messelektronikteil (5) trägt und wobei die Leiterplatte (19) mit einer Leiterplattenebene (19E) parallel zu der ersten Zellblockseite (2aS1) und/oder orthogonal zu der zweiten Richtung (y) räumlich angeordnet ist.

9. Akkupack (1) nach einem der Ansprüche 5 oder 6 bis 8, sofern von Anspruch 5 abhängig, **dadurch gekennzeichnet,**
- **dass** die Elektronikeinheit (3) eine gemeinsame Leiterplatte (19) aufweist, wobei die gemeinsame Leiterplatte (19) den Messelektronikteil (5) und den Leistungselektronikteil (16) trägt.

10. Akkupack (1) nach einem der vorhergehenden Ansprüche, **dadurch gekennzeichnet,**
- **dass** die Akkumulatorzellen (4a), insbesondere längliche, Rundzellen sind, wobei die Rundzellen (4a) jeweils mit einer Rundzellenlängsachse (LA) nicht-parallel, insbesondere orthogonal, zur ersten Richtung (x) und/oder zur zweiten Richtung (y) und/oder in einer zur ersten und zweiten, nicht-parallelen, insbesondere orthogonalen, dritten Richtung (z) räumlich angeordnet sind, und/oder
- **dass** mindestens ein Teil der Akkumulatorzellen (4a) in der zweiten Richtung (y) aufeinanderfolgend räumlich angeordnet ist, insbesondere und elektrisch parallel geschaltet ist, und/oder
- **dass** der Zellblock (2a) quaderförmig ist.

11. Akkupack (1) nach einem der vorhergehenden Ansprüche, **dadurch gekennzeichnet,**
- **dass** der Akkupack (1) mindestens einen weiteren Zellblock (2b, 2c) aufweist, wobei der mindestens eine weitere Zellblock (2b, 2c) auf der zweiten Zellblockseite (2aS2) in der zweiten Richtung (y) räumlich angeordnet ist,
- wobei der Akkupack (1) mindestens eine weitere erste elektrische Leistungsleitung (6b1, 6c1) und mindestens eine weitere zweite elektrische Leistungsleitung (6b2, 6c2) aufweist, wobei die mindestens einer weitere zweite elektrische Leistungsleitung (6b2, 6c2) mit einer der Akkumulatorzellen (4b, 4c) des mindestens einen weiteren Zellblocks (2b, 2c) am zweiten Zellblockende (2bE2, 2cE2) elektrisch verbunden ist, und wobei die mindestens eine weitere erste elektrische Leistungsleitung (6b1, 6c1) am zweiten Zellblockende (2aE2) des Zellblocks (2a) von der ersten Zellblockseite (2aS1) des Zellblocks (2a) in der zweiten Richtung (y) mindestens zu der zweiten Zellblockseite (2aS2) des Zellblocks (2a) und, insbesondere auf einer zweiten Zellblockseite (2bS2) des mindestens einen weiteren Zellblocks (2b), entgegen der ersten Richtung (x) zum ersten Zellblockende (2bE1, 2cE1) des mindestens einen weiteren Zellblocks (2b, 2c) verläuft und mit einer der Akkumulatorzellen (4b, 4c) des mindestens einen weiteren Zellblocks (2b, 2c) am ersten Zellblockende (2bE1, 2cE1) elektrisch verbunden ist.

12. Akkupack (1) nach einem der vorhergehenden Ansprüche, **dadurch gekennzeichnet,**
- **dass** eine maximale elektrische Antriebsleistung (MAL) minimal 50 W und/oder maximal 5 kW ist, und/oder
- **dass** das Maximalpotential (MXP) minimal 10 V, insbesondere minimal 20 V, und/oder maximal 500 V, insbesondere maximal 100 V, ist, und/oder
- **dass** ein maximaler Energieinhalt (MEI) minimal 80 Wh und/oder maximal 5 kWh ist.

13. Garten- und/oder Forstbearbeitungssystem (100), wobei das Garten- und/oder Forstbearbeitungssystem (100) aufweist:
- einen Akkupack (1) nach einem der vorhergehenden Ansprüche, und
- ein elektrisch angetriebenes Garten- und/oder Forstbearbeitungsgerät (101),
- wobei der Akkupack (1) und das elektrisch angetriebene Garten- und/oder Forstbearbeitungsgerät (101) zur elektrischen Verbindung miteinander zur Versorgung des elektrisch angetriebenen Garten- und/oder Forstbearbeitungsgeräts (101) mit elektrischer Antriebsleistung (AL) von dem Akkupack (1) ausgebildet sind.

14. Garten- und/oder Forstbearbeitungssystem (100) nach Anspruch 13, wobei das Garten- und/oder Forstbearbeitungssystem (100) aufweist:
- eine Rückentragvorrichtung (102), wobei die Rückentragvorrichtung (102) zum Tragen des Akkupacks (1) ausgebildet ist.

15. Garten- und/oder Forstbearbeitungssystem (100) nach Anspruch 13 oder 14,
- wobei das elektrisch angetriebene Garten- und/oder Forstbearbeitungsgerät (101) eine Säge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer oder eine Grasschere ist.

## Claims

1. Rechargeable battery pack (1) for supplying electrical drive power (AL) to an electrically driven gardening and/or forestry work appliance (101), wherein the rechargeable battery pack (1) has:
- a cell block (2a), wherein the cell block (2a) has a plurality of rechargeable battery cells (4a), wherein at least some of the rechargeable battery cells (4a) are physically arranged consecutively from a first cell block end (2aE1) of the cell block (2a) in at least a first direction (x) to a second cell block end (2aE2) of the cell block (2a) and are electrically connected in series, and
- an electronics unit (3), wherein the electronics unit (3) has a measurement electronics part (5), **characterized in that**
- the rechargeable battery pack (1) has a first electrical power line (6a1) and a second electrical power line (6a2),
- wherein the second electrical power line (6a2) is electrically connected to one of the rechargeable battery cells (4a) at the second cell block end (2aE2),
- wherein the first electrical power line (6a1) at the second cell block end (2aE2) runs from a first cell block side (2aS1) of the cell block (2a) in a second direction (y), which is not parallel to the first direction, to a second cell block side (2aS2) of the cell block (2a) opposite to the first cell block side and on the second cell block side (2aS2) counter to the first direction (x) to the first cell block end (2aE1) and is electrically connected to one of the rechargeable battery cells (4a) at the first cell block end (2aE1), and
- wherein the measurement electronics part (5) is physically arranged on the first cell block side (2aS1) spaced apart from the second cell block end (2aE2) counter to the first direction (x) .

2. Rechargeable battery pack (1) according to Claim 1, **characterized in that**
- the measurement electronics part (5) is designed to measure at least one property, in particular a temperature (T) and/or a voltage (SP), in particular a medium voltage, of one or more of the rechargeable battery cells (4a).

3. Rechargeable battery pack (1) according to either of the preceding claims, **characterized in that**
- the measurement electronics part (5) has at least one voltage divider (11) and/or at least one capacitor (12) and/or at least one operational amplifier (13) and/or at least one microcontroller (14) .

4. Rechargeable battery pack (1) according to one of the preceding claims, **characterized in that**
- the rechargeable battery pack (1) has a number of measurement lines (15a),
- wherein the measurement electronics part (5) is electrically connected to the number of measurement lines (15a), and
- wherein the number of measurement lines (15a) at the first cell block end (2aE1) runs from the first cell block side (2aS1) of the cell block (2a) in the second direction (y) to the rechargeable battery cells (4a), in particular and is electrically connected to one of the rechargeable battery cells (4a).

5. Rechargeable battery pack (1) according to one of the preceding claims, **characterized in that**
- the electronics unit (3) has a power electronics part (16),
- wherein the power electronics part (16) is electrically connected to the first electrical power line (6a1) and the second electrical power line (6b1) and, in particular on the first cell block side (2aS1), is physically arranged spaced apart from the first cell block end (2aE1) and/or from the measurement electronics part (5) in the first direction (x).

6. Rechargeable battery pack (1) according to Claim 5, **characterized in that**
- the power electronics part (16) is designed to transform and/or to switch the electrical drive power (AL), in particular the power electronics part (16) has at least one circuit breaker (17).

7. Rechargeable battery pack (1) according to one of the preceding claims, **characterized in that**
- the measurement electronics part (5) extends by way of a first measurement electronics part end (5E1) up to the first cell block end (2aE1), and/or
- the measurement electronics part (5) extends by way of a second measurement electronics part end (5E2) up to at most a half, in particular at most a quarter, of a path from the first cell block end (2aE1) in the first direction (x) to the second cell block end (2aE2).

8. Rechargeable battery pack (1) according to one of the preceding claims, **characterized in that**
- the electronics unit (3) has a printed circuit board (19), wherein the printed circuit board (19) carries the measurement electronics part (5) and wherein the printed circuit board (19) is physically arranged with a printed circuit board plane (19E) parallel to the first cell block side (2aS1) and/or orthogonal to the second direction (y).

9. Rechargeable battery pack (1) according to one of Claims 5 or 6 to 8, provided that dependent on Claim 5, **characterized in that**
- the electronics unit (3) has a common printed circuit board (19), wherein the common printed circuit board (19) carries the measurement electronics part (5) and the power electronic part (16) .

10. Rechargeable battery pack (1) according to one of the preceding claims, **characterized in that**
- the rechargeable battery cells (4a) are, in particular elongate, round cells, wherein the round cells (4a) are each physically arranged with a round cell longitudinal axis (LA) not in parallel, in particular orthogonal, to the first direction (x) and/or to the second direction (y) and/or in a third direction (z) not parallel, in particular orthogonal, to the first and second direction, and/or
- at least some of the rechargeable battery cells (4a) are physically arranged consecutively in the second direction (y), in particular and are electrically connected in parallel, and/or
- the cell block (2a) is cuboidal.

11. Rechargeable battery pack (1) according to one of the preceding claims, **characterized in that**
- the rechargeable battery pack (1) has at least one further cell block (2b, 2c), wherein the at least one further cell block (2b, 2c) is physically arranged on the second cell block side (2aS2) in the second direction (y),
- wherein the rechargeable battery pack (1) has at least one further first electrical power line (6b1, 6c1) and at least one further second electrical power line (6b2, 6c2), wherein the at least one further second electrical power line (6b2, 6c2) is electrically connected to one of the rechargeable battery cells (4b, 4c) of the at least one further cell block (2b, 2c) at the second cell block end (2bE2, 2cE2), and wherein the at least one further first electrical power line (6b1, 6c1) at the second cell block end (2aE2) of the cell block (2a) runs from the first cell block side (2aS1) of the cell block (2a) in the second direction (y) at least to the second cell block side (2aS2) of the cell block (2a) and, in particular on a second cell block side (2bS2) of the at least one further cell block (2b), counter to the first direction (x) to the first cell block end (2bE1, 2cE1) of the at least one further cell block (2b, 2c) and is electrically connected to one of the rechargeable battery cells (4b, 4c) of the at least one further cell block (2b, 2c) at the first cell block end (2bE1, 2cE1).

12. Rechargeable battery pack (1) according to one of the preceding claims, **characterized in that**
- a maximum electrical drive power (MAL) is a minimum of 50 W and/or a maximum of 5 kW, and/or
- the maximum potential (MXP) is a minimum of 10 V, in particular a minimum of 20 V, and/or a maximum of 500 V, in particular a maximum of 100 V, and/or
- a maximum energy content (MEI) is a minimum of 80 Wh and/or a maximum of 5 kWh.

13. Gardening and/or forestry work system (100), wherein the gardening and/or forestry work system (100) has:
- a rechargeable battery pack (1) according to one of the preceding claims, and
- an electrically driven gardening and/or forestry work appliance (101),
- wherein the rechargeable battery pack (1) and the electrically driven gardening and/or forestry work appliance (101) are designed for electrical connection to one another for supplying electrical drive power (AL) from the rechargeable battery pack (1) to the electrically driven gardening and/or forestry work appliance (101).

14. Gardening and/or forestry work system (100) according to Claim 13, wherein the gardening and/or forestry work system (100) has:
- a harness (102), wherein the harness (102) is designed to carry the rechargeable battery pack (1) .

15. Gardening and/or forestry work system (100) according to Claim 13 or 14,
- wherein the electrically driven gardening and/or forestry work appliance (101) is a saw, a pole-mounted pruner, a brush cutter, a hedge trimmer, a hedge cutter, a blower, a leaf blower, a lopper, an angle grinder, a sweeping appliance, a sweeping roller, a sweeping brush, a lawnmower, a scarifier or a grass trimmer.

## Revendications

1. Bloc d'accumulateur (1) permettant d'alimenter en puissance d'entraînement électrique (AL) un appareil de travaux de jardinage et/ou forestiers (101) à entraînement électrique, le bloc d'accumulateur (1) présentant :
- un bloc de cellules (2a), le bloc de cellules (2a) présentant une pluralité de cellules d'accumulateur (4a), au moins une partie des cellules d'accumulateur (4a) étant disposée physiquement les unes après les autres d'une première extrémité de bloc de cellules (2aE1) du bloc de cellules (2a) dans au moins une première direction (x) à une deuxième extrémité de bloc de cellules (2aE2) du bloc de cellules (2a) et étant connectée électriquement en série, et
- une unité électronique (3), l'unité électronique (3) présentant une partie d'électronique de mesure (5), **caractérisé en ce que**
- le bloc d'accumulateur (1) présente une première ligne de puissance électrique (6a1) et une deuxième ligne de puissance électrique (6a2),
- la deuxième ligne de puissance électrique (6a2) étant reliée électriquement à l'une des cellules d'accumulateur (4a) au niveau de la deuxième extrémité de bloc de cellules (2aE2),
- la première ligne de puissance électrique (6a1) s'étendant au niveau de la deuxième extrémité de bloc de cellules (2aE2) d'une première face de bloc de cellules (2aS1) du bloc de cellules (2a) dans une deuxième direction (y), non parallèle à la première, à une deuxième face de bloc de cellules (2aS2), opposée à la première, du bloc de cellules (2a) et sur la deuxième face de bloc de cellules (2aS2) à l'opposé de la première direction (x) jusqu'à la première extrémité de bloc de cellules (2aE1), et étant reliée électriquement à l'une des cellules d'accumulateur (4a) au niveau de la première extrémité de bloc de cellules (2aE1), et
- la partie d'électronique de mesure (5) sur la première face de bloc de cellules (2aS1) étant disposée physiquement à distance de la deuxième extrémité de bloc de cellules (2aE2) à l'opposé de la première direction (x) .

2. Bloc d'accumulateur (1) selon la revendication 1, **caractérisé en ce que**
- la partie d'électronique de mesure (5) est réalisée pour mesurer au moins une propriété, en particulier une température (T) et/ou une tension (SP), en particulier une tension moyenne, d'une ou de plusieurs des cellules d'accumulateur (4a).

3. Bloc d'accumulateur (1) selon l'une quelconque des revendications précédentes, **caractérisé en ce que**
- la partie d'électronique de mesure (5) présente au moins un diviseur de tension (11) et/ou au moins un condensateur (12) et/ou au moins un amplificateur opérationnel (13) et/ou au moins un microcontrôleur (14) .

4. Bloc d'accumulateur (1) selon l'une quelconque des revendications précédentes, **caractérisé en ce que**
- le bloc d'accumulateur (1) présente un nombre de lignes de mesure (15a),
- la partie d'électronique de mesure (5) étant reliée électriquement au nombre de lignes de mesure (15a), et
- le nombre de lignes de mesure (15a) au niveau de la première extrémité de bloc de cellules (2aE1) s'étendant de la première face de bloc de cellules (2aS1) du bloc de cellules (2a) dans la deuxième direction (y) aux cellules d'accumulateur (4a), et en particulier en étant relié électriquement à l'une des cellules d'accumulateur (4a).

5. Bloc d'accumulateur (1) selon l'une quelconque des revendications précédentes, **caractérisé en ce que**
- l'unité électronique (3) présente une partie d'électronique de puissance (16),
- la partie d'électronique de puissance (16) étant reliée électriquement à la première ligne de puissance électrique (6a1) et à la deuxième ligne de puissance électrique (6b1), et en particulier sur la première face de bloc de cellules (2aS1), en étant disposée physiquement à distance de la première extrémité de bloc de cellules (2aE1) et/ou de la partie d'électronique de mesure (5) dans la première direction (x).

6. Bloc d'accumulateur (1) selon la revendication 5, **caractérisé en ce que**
- la partie d'électronique de puissance (16) est réalisée pour transformer et/ou commuter la puissance d'entraînement électrique (AL), la partie d'électronique de puissance (16) présentant en particulier au moins un commutateur de puissance (17).

7. Bloc d'accumulateur (1) selon l'une quelconque des revendications précédentes, **caractérisé en ce que**
- la partie d'électronique de mesure (5) s'étend avec une première extrémité de partie d'électronique de mesure (5E1) jusqu'à la première extrémité de bloc de cellules (2aE1), et/ou
- la partie d'électronique de mesure (5) s'étend avec une deuxième extrémité de partie d'électronique de mesure (5E2) au maximum jusqu'à la moitié, en particulier au maximum jusqu'au quart, d'une distance de la première extrémité de bloc de cellules (2aE1) à la deuxième extrémité de bloc de cellules (2aE2) dans la première direction (x).

8. Bloc d'accumulateur (1) selon l'une quelconque des revendications précédentes, **caractérisé en ce que**
- l'unité électronique (3) présente une carte de circuits imprimés (19), la carte de circuits imprimés (19) portant la partie d'électronique de mesure (5), et la carte de circuits imprimés (19) étant disposée physiquement avec un plan de carte de circuits imprimés (19E) en parallèle à la première face de bloc de cellules (2aS1) et/ou de manière orthogonale à la deuxième direction (y).

9. Bloc d'accumulateur (1) selon l'une quelconque des revendications 5 ou 6 à 8, dans la mesure où elles dépendent de la revendication 5, **caractérisé en ce que**
- l'unité électronique (3) présente une carte de circuits imprimés commune (19), la carte de circuits imprimés commune (19) portant la partie d'électronique de mesure (5) et la partie d'électronique de puissance (16) .

10. Bloc d'accumulateur (1) selon l'une quelconque des revendications précédentes, **caractérisé en ce que**
- les cellules d'accumulateur (4a) sont en particulier des piles cylindriques allongées, les piles cylindriques (4a) étant respectivement disposées physiquement avec un axe longitudinal de pile cylindrique (LA) non parallèle, en particulier orthogonal, par rapport à la première direction (x) et/ou à la deuxième direction (y) et/ou dans une troisième direction (z) non parallèle, en particulier orthogonale, à la première et à la deuxième direction, et/ou
- au moins une partie des cellules d'accumulateur (4a) est disposée physiquement les unes après les autres dans la deuxième direction (y), en particulier, et en étant en particulier connectées électriquement en parallèle, et/ou
- le bloc de cellules (2a) est parallélépipédique.

11. Bloc d'accumulateur (1) selon l'une quelconque des revendications précédentes, **caractérisé en ce que**
- le bloc d'accumulateur (1) présente au moins un autre bloc de cellules (2b, 2c), dans lequel ledit au moins un autre bloc de cellules (2b, 2c) est disposé physiquement sur la deuxième face de bloc de cellules (2aS2) dans la deuxième direction (y),
- le bloc d'accumulateur (1) présente au moins une autre première ligne de puissance électrique (6b1, 6c1) et au moins une autre deuxième ligne de puissance électrique (6b2, 6c2), ladite au moins une autre deuxième ligne de puissance électrique (6b2, 6c2) étant reliée électriquement à l'une des cellules d'accumulateur (4b, 4c) du au moins un autre bloc de cellules (2b, 2c) au niveau de la deuxième extrémité de bloc de cellules (2bE2, 2cE2), et ladite au moins une autre première ligne de puissance électrique (6b1, 6c1) au niveau de la deuxième extrémité de bloc de cellules (2aE2) du bloc de cellules (2a) s'étendant de la première face de bloc de cellules (2aS1) du bloc de cellules (2a) dans la deuxième direction (y) au moins jusqu'à la deuxième face de bloc de cellules (2aS2) du bloc de cellules (2a), et en particulier sur une deuxième face de bloc de cellules (2bS2) du au moins un autre bloc de cellules (2b), à l'opposé de la première direction (x) jusqu'à la première extrémité de bloc de cellules (2bE1, 2cE1) du au moins un autre bloc de cellules (2b, 2c), et étant reliée électriquement à l'une des cellules d'accumulateur (4b, 4c) du au moins un autre bloc de cellules (2b, 2c) au niveau de la première extrémité de bloc de cellules (2bE1, 2cE1).

12. Bloc d'accumulateur (1) selon l'une quelconque des revendications précédentes, **caractérisé en ce que**
- une puissance d'entraînement électrique maximale (MAL) est au minimum de 50 W et/ou au maximum de 5 kW, et/ou
- le potentiel maximal (MXP) est au minimum de 10 V, en particulier au minimum de 20 V, et/ou au maximum de 500 V, en particulier au maximum de 100 V, et/ou
- une teneur énergétique maximale (MEI) est au minimum de 80 Wh et/ou au maximum de 5 kWh.

13. Système de travaux de jardinage et/ou forestiers (100), le système de travaux de jardinage et/ou forestiers (100) présentant :
- un bloc d'accumulateur (1) selon l'une quelconque des revendications précédentes, et
- un appareil de travaux de jardinage et/ou forestiers (101) à entraînement électrique,
- le bloc d'accumulateur (1) et l'appareil de travaux de jardinage et/ou forestiers (101) à entraînement électrique étant réalisés ensemble pour une liaison électrique permettant d'alimenter l'appareil de travaux de jardinage et/ou forestiers (101) à entraînement électrique en puissance d'entraînement électrique (AL) provenant du bloc d'accumulateur (1).

14. Système de travaux de jardinage et/ou forestiers (100) selon la revendication 13, dans lequel le système de travaux de jardinage et/ou forestiers (100) présente
- un dispositif sac à dos (102), le dispositif sac à dos (102) étant réalisé pour porter le bloc d'accumulateur (1).

15. Système de travaux de jardinage et/ou forestiers (100) selon la revendication 13 ou 14,
- le système de travaux de jardinage et/ou forestiers (101) à entraînement électrique étant une scie, une élagueuse, une débroussailleuse, un taillehaie, une tailleuse de haie, un souffleur, un chassefeuille, un sécateur, une meuleuse, un appareil de balayage, un cylindre balayeur, une brosse de balayage, une tondeuse à gazon, un scarificateur ou une cisaille à gazon.
